# EUROPÄISCHE PATENTSCHRIFT

(11) **EP 2 686 769 B1**
(45) Veröffentlichungstag und Bekanntmachung des Hinweises auf die Patenterteilung: **30.09.2015**
(21) Anmeldenummer: 12710896.7
(22) Anmeldetag: 12.03.2012
(51) Int. Cl.: G06F 11/07, H02P 8/00, G01R 7/06

(54) **ANZEIGEVORRICHTUNG MIT SCHRITTMOTOR UND WATCHDOGTIMER**
DISPLAY DEVICE HAVING A STEPPER MOTOR AND A WATCHDOG TIMER
DISPOSITIF INDICATEUR POURVU D'UN MOTEUR PAS À PAS ET D'UNE HORLOGE DE SURVEILLANCE

(30) Priorität: 14.03.2011 DE 102011013833
(43) Veröffentlichungstag der Anmeldung: 22.01.2014
(73) Patentinhaber: Continental Automotive GmbH, 30165 Hannover (DE)
(72) Erfinder: BRAUN, Christian, 63741 Aschaffenburg (DE)
(86) Internationale Anmeldenummer: PCT/EP2012/054226
(87) Internationale Veröffentlichungsnummer: WO 2012/123393

(56) Entgegenhaltungen:
- DE-A1- 19 600 687
- US-A- 4 263 647
- FUJITSU SEMICONDUCTOR LIMITED: "MB88F332 LSI Product Specifications Edition 1.2", , 30. September 2010 (2010-09-30), Seite 735PP, XP055025355, Gefunden im Internet: URL:http://www.rlocman.ru/i/File/dat/Fujit su/Microprocessors_MPU/MB88F332CAPMC_GSE2. pdf [gefunden am 2012-04-23]
- Fujitsu Microelectronics America, Inc.: "Fujitsu and Inova Help Design and Manufacture High-Performance Graphics Display Systems (Case Study MB88F332)", , 1. Januar 2010 (2010-01-01), Seite 7PP, XP055025360, Gefunden im Internet: URL:http://www.fujitsu.com/downloads/MICRO /fme/displaycontrollers/case-study-inova.p df [gefunden am 2012-04-23]

## Beschreibung

Die Erfindung betrifft eine Anzeigevorrichtung aufweisend einen Mikrokontroller, einem Grafikkontroller, wobei der Grafikkontroller keine arithmetisch logische Einheit besitzt und durch den Mikrokontroller und durch Command-Sequenzen eines in dem Grafikkontroller enthaltenen Command-Sequenzer steuerbar ist. Hierbei enthält der Grafikkontroller einen oder mehrere Schrittmotorcontroller und der Command-Sequenzer einen Watchdogtimer. Spezielle Grafikkontroller werden insbesondere bei Anzeigen in Kraftfahrzeugen dazu benutzt, die Arbeitsbelastung der Mikrokontroller herabzusetzen und dennoch komplexe Anzeigen steuern zu können. Hierbei steuert der Mikrokontroller den Grafikkontroller, der wiederum ein oder mehrere elektrooptische Displays und ein oder mehrere Zeigerinstrumente, die über einen Schrittmotor angetrieben werden, ansteuert. Ein derartiger Grafikkontroller ist beispielsweise als der Grafikkontroller MB88F332 der Fa. Fujitsu bekannt.

Insbesondere, wenn der Mikrokontroller und der Grafikkontroller infolge eines speziellen Aufbaus der Anzeigevorrichtung nicht auf einer gemeinsamen Leiterplatte, sondern auf verschiedenen Leiterplatten angeordnet sind, wird gefordert, dass die physikalische und logische Verbindung von Mikrokontroller und Grafikkontroller überwacht wird und in einem Fehlerfall einem Benutzer der Anzeigevorrichtung ein klarer Hinweis gegeben wird, dass die Anzeigevorrichtung einen Fehlerfall aufweist.

Die DE 196 00 687 A1 beschreibt das Zurücksetzen eines Zeigers einer mechanischen Anzeige mittels eines Schrittmotors.

Die case study MB88F332, 01. Januar 2010, Seiten 1 bis 7, XP55025360 beschreibt die Generierung eines akustischen Warnsignals durch einen Grafikkontroller und offenbart, dass der Grafikkontroller mechanische Anzeigen kontrollieren sowie den Touchscreen verwalten kann.

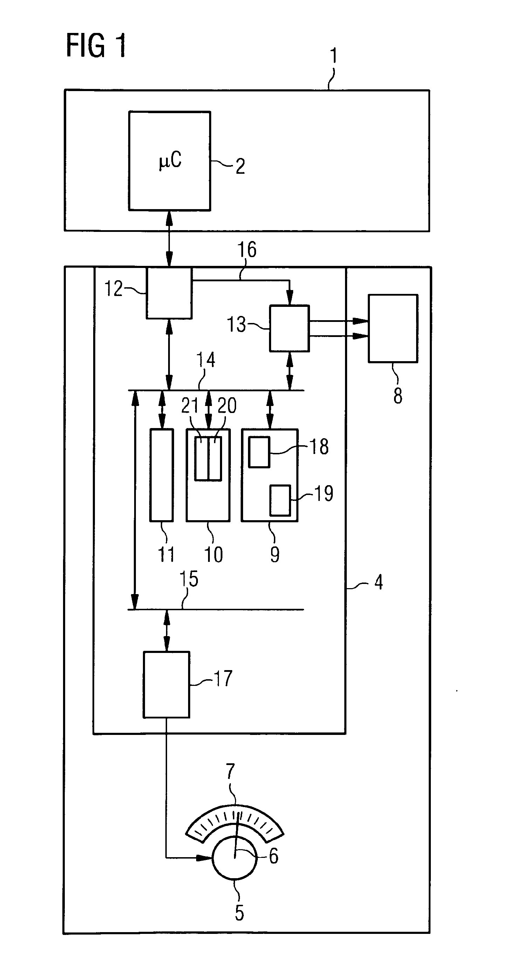

Die MB88F332LSI Product Specifications Adition 1.2, 30. September 2010, Seiten 1 - 735, in Figuren 1-1, 4-20 und Abschnitten 7.1 und 7.3.11 beschreibt eine Anzeigevorrichtung mit den Merkmalen des Oberbegriffs des Patentanspruchs 1, nämlich eine Anzeigevorrichtung, aufweisend einen Mikrokontroller, einen Grafikkontroller, wobei der Grafikkontroller keine arithmetisch logische Einheit besitzt und durch den Mikrokontroller und durch Command-Sequenzen eines in dem Grafikkontroller enthaltenen Command-Sequenzer steuerbar ist, wobei der Grafikkontroller einen Schrittmotorkontroller und der Command-Sequenzer einen Watchdogtimer aufweist.

Bei einem Kombinationsinstrument eines Kraftfahrzeuges soll ein Hinweis dadurch geschehen, dass die Zeiger sowohl eines vorhandenen Tachometers als auch Drehzahlmessers in eine Grundposition, beispielsweise eine Nullposition, gefahren werden, so dass einem entsprechenden Benutzer der Anzeigevorrichtung der Fehlerfall klar vor Augen geführt wird. Der vorgenannte Grafikkontroller enthält keine arithmetisch logische Einheit, um im Fehlerfall die vorhandenen Zeigerinstrument in eine Grundposition zu fahren.

Die Aufgabe der Erfindung ist es daher, auf eine Fehlerfalle im Grafikkontroller hinzuweisen und eine einfache Lösung anzugeben, wie die Zeigerinstrumente bei einem Verbindungsfehler zwischen dem Mikrokontroller und dem Grafikkontroller in eine Grundposition oder gegen einen Anschlag bewegt werden können.

Diese Aufgabe wird durch eine Anzeigevorrichtung mit den Merkmalen des Patentanspruchs 1 gelöst. Hierdurch wird erreicht, dass bei einem erkannten Fehlerfall der Verbindung zwischen Mikrokontroller und Grafikkontroller die erste Command-Sequenz wiederholt die zweite Command-Sequenz startet und durch den Schrittmotor so bei jeder einzelnen Ausführung der zweiten Command-Sequenz um einen Schritt in Richtung eines Anschlages oder einer Grundposition bewegt wird.

Um sicher zu sein, dass der oder die Zeiger in einer Grundposition oder zu einem Anschlag bewegt worden sind, wäre es zum einen möglich, die Position der Zeiger zu überwachen und die Ansteuerung entsprechend bei Erreichen der Position einzustellen. Wesentlich einfacher ist diese Erreichbarkeit der Grundposition zu realisieren, wenn die erste Command-Sequenz solange ausführbar ist, bis der Zeiger aus jeder möglichen Position zu dem Anschlag oder der Grundposition gelangt ist. Hierbei werden die Schrittmotoren also solange angesteuert, wie sie benötigen würden, um von einer Endposition bis zu einer Grundposition zu gelangen. Durch den zurückzulegenden Weg der Zeiger ist es klar, wie viele Schritte der Schrittmotor in Richtung der Grundposition oder des Anschlages zurückzulegen hat. Sofern der Zeiger sich beispielsweise im Fehlerfall nicht in einer Endposition, sondern in einer mittleren Position befindet, wird er in Richtung des Anschlages oder der Grundposition bewegt. Nach Erreichen des Anschlages kann er sich auch dann nicht weiterbewegen, wenn er weiterhin angesteuert wird. So wird durch eine Ansteuerung mit der maximal erforderlichen Zeit erreicht, dass sich der Zeiger in der Grundposition befindet, ohne eine separate Überprüfung seiner Lage durchführen zu müssen.

Das HSYNC-Signal wird üblicherweise verwendet, um die einzelnen Bildzeilen eines darzustellenden Bildes in einem Display zu synchronisieren. Eine Verwendung dieses Signals für Command-Sequenzen ist üblicherweise nicht zugelassen, da dadurch die Belastung des Mikrokontrollers zu hoch würde und eine Störung des Mikrokontrollers zur Folge hätte. Diese Überlastung kann aber nicht eintreten, wenn die Verbindung zwischen dem Grafikkontroller und dem Mikrokontroller gestört ist und somit den Mikrokontroller auch nicht überlasten kann. Durch die Verwendung des HSYNC-Signals als zyklisches Signal wird ein Signal erreicht, dessen Zyklus gut geeignet ist, innerhalb der Zeitdauer eines Zyklus einen Schritt des Schrittmotors auszuführen, ohne unnötig lange Wartezeiten zu haben. Hierdurch werden die Zeiger im Fehlerfall zügig in die Grundposition gebracht.

Dadurch, dass die erste und/oder zweite Command-Sequenz in einem internen Flash-Speicher des Grafikkontrollers abgelegt sind, ist ein sofortiges Abarbeiten der Command-Sequenz möglich, ohne diese zunächst erst einmal in dem Grafikkontroller speichern zu müssen. Wenn die erste und/oder zweite Command-Sequenz in einem internen RAM erzeugbar und ablegbar sind, kann die Command-Sequenz insgesamt umfangreicher ausgestaltet sein, da das interne RAM eines Grafikkontrollers meist wesentlich größer ausgestaltet ist als der interne Flash-Speicher.

Wenn der Mikrokontroller und der Grafikkontroller über eine APIX-Kommunikationsschnittstelle verbunden sind, ist eine einfache Kommunikation zwischen dem Mikrokontroller und dem Grafikkontroller möglich.

Die Erfindung wird nachfolgend anhand der folgenden Figuren beschrieben. Es zeigen:
- Figur 1: ein Blockschaltbild einer erfindungsgemäßen Anzeigevorrichtung,
- Figur 2: ein Ablaufdiagramm mit den Schritten, die die Anzeigevorrichtung nach Figur 1 ausführt.

In Figur 1 erkennt man eine erste Leiterplatte 1 mit einem Mikrokontroller 2 und eine zweite Leiterplatte 3 mit einem Grafikkontroller 4, einem Schrittmotor 5, einem Zeiger 6, einem Teil eines Zifferblattes 7 und einem Display 8. Der Grafikkontroller 4 enthält einen Command-Sequenzer 9, einen Flash-Speicher 10, einen SRAM-Speicher 11, eine APIX-Verbindungsstelle 12, einen Videokontroller 13, einen ersten Datenbus 14, einen zweiten Datenbus 15, einen sogenannten Pixellink 16 und einen Schrittmotorcontroller 17. Der Command-Sequenzer 9 enthält einen Watchdogtimer 18 und einen Command-Sequenzer-Kontroller 19. Der Flash-Speicher 10 enthält eine erste Command-Sequenz 20 und eine zweite Command-Sequenz 21. Die erste und zweite Command-Sequenz sind als Befehlslisten zu verstehen, die nur sequenziell abgearbeitet werden können und keine logische Verknüpfung enthalten können. Somit ist kein Algorithmus wie in einem herkömmlichen Mikrokontroller implementierbar.

Im normalen Betrieb steuert der Mikrokontroller 2 über die APIX-Schnittstelle 12 und den Pixellink 16 den Videokontroller 13 und dieser das Display 8 an. Zwischen Videokontroller 13 und dem Display 8 werden zum einen die RGB-Informationen und die Zeitfunktionen wie zum Beispiel die horizontale Synchronisation HSYNC und die vertikale Synchronisation VSINC des darzustellenden Bildes übertragen.

Der Mikrokontroller 2 steuert weiterhin über die APIX-Schnittstelle 12 den Schrittmotorcontroller 17 an, der wiederum den Schrittmotor 5 ansteuert und somit die Lage des Zeigers 6 auf dem Zifferblatt 7 bestimmt. Der Watchdogtimer 18 überwacht die logische und physikalische Verbindung mit dem Mikrokontroller 2 und der APIX-Schnittstelle 12. Sobald er einen Verbindungsabbruch feststellt, startet der Command-Sequenzer 9 die erste Command-Sequenz 20 im Flash-Speicher 10. Diese erste Command-Sequenz 20 aktiviert das interne HSYNC-Signal des Grafikkontrollers 4, welche als Trickerquelle für die zweite Command-Sequenz 21 verwendet wird. Die zweite Command-Sequenz 21 enthält jeweils einen Schrittmotorschritt für den Schrittmotor 5, dadurch wird im Zyklus des HSYNC-Signals jeweils ein Schrittmotorschritt ausgeführt. Die zweite Command-Sequenz 21 wird eine bestimmte Zeitdauer durchgeführt, beispielsweise 3,2 Sekunden, die ausreichend ist, den Schrittmotor 5 und damit den Zeiger 6 aus jeder beliebigen Position bis in die Grundposition zurückzufahren. Nach Ablauf dieser Zeitdauer wird das aktivierte HSYNC-Signal wieder deaktiviert und dadurch die zweite Command-Sequenz 21 abgeschaltet, so dass der Zeiger 6 in seiner Grundposition verbleibt.

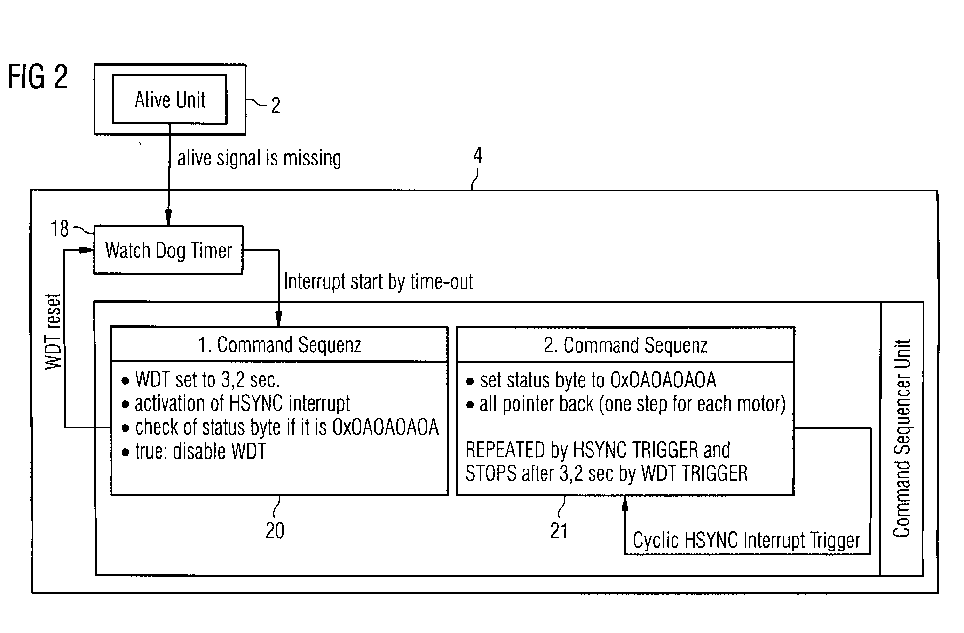

In Figur 2 überwacht der Watchdogtimer 18 das aktive Signal des Mikrokontrollers 2. Sofern er ein Fehlen des aktiven Signals 2 feststellt, startet er die erste Command-Sequenz 20. Diese stellt den Watchdogtimer 18 auf 3,2 Sekunden und aktiviert das HSYNC-Signal. Weiterhin wird gecheckt, ob das Status-Byte einen bestimmten Wert aufweist, hier im Beispielsfall 0x0A0A0A0A. Da die erste Command-Sequenz 20 eine höhere Priorität hat als die zweite Command-Sequenz 21, ist dieses Status-Byte noch nicht auf den speziellen Wert gesetzt: deshalb wird die erste Command-Sequenz 20 beendet. Nun kann das HSynC Signal zyklisch die zweite Command-Sequenz 21 starten und bei jedem Durchlauf das Status-Byte auf den Wert 0x0A0A0A0A setzen und den Zeiger 6 um einen Schritt des Schrittmotors 5 in Richtung der Grundposition zurückfahren. Nach 3,2 Sekunden gibt der Watchdogtimer 18 (da er auf diese Zeit gesetzt ist)ein erneutes Interrupt -Start Signal an die erste Command-Sequenz 20 aus. Deshalb startet die erste Command-Sequenz 20, während gleichzeitig wegen deren niedrigeren Priorität die zweite Command-Sequenz 21 angehalten wird. So wird der Schrittmotor 5 nicht weiterbewegt.

In der ersten Command-Sequenz 20 werden der Watchdogtimer 18 auf 3,2 Sekunden gesetzt und das HSync Signal wieder eingeschaltet (diese Einstellungen haben keine Auswirkungen auf den weiteren Funktionsverlauf). Dann wird das Status-Byte überprüft: da es zuvor von der zweiten Command-Sequenz 21 auf den entsprechenden Wert gesetzt wurde, ist die erforderliche Bedingung wahr, so dass der Watchdogtimer 18 und das HSynC Signal ausgeschaltet werden. Da dadurch sowohl die erste Sequenz 20 als auch die zweite Sequenz 21 nicht mehr getriggert werden, bleiben sie inaktiv.

Die Funktionsweise der vorliegenden Erfindung wurde anhand eines einzelnen Schrittmotors dargestellt. Es sind natürlich auch mehrere Schrittmotoren über einen oder mehrere Schrittmotorcontroller ansteuerbar, so dass auch mehrere Zeiger in eine Grundposition beim Vorliegen eines Fehlers der Signalübertragung gefahren werden können.

## Patentansprüche

1. Anzeigevorrichtung aufweisend einen Mikrokontroller (2), einen Grafikkontroller (4), wobei der Grafikkontroller (4) keine arithmetisch logische Einheit besitzt und durch den Mikrokontroller (4) und durch Command-Sequenzen (20, 21) eines in dem Grafikkontroller (4) enthaltenen Command-Sequenzer (9) steuerbar ist, wobei der Grafikkontroller (4) einen Schrittmotorcontroller (17) und der Command-Sequenzer (9) einen Watchdogtimer (18) aufweist, **dadurch gekennzeichnet, dass**
- eine Anzeigevorrichtung aufweisend einen mit einem Schrittmotor (5) angetriebenen Zeiger (6) vorhanden ist,
- der Watchdogtimer (18) ausgebildet ist, ein Verbindungssignal zwischen dem Mikrokontroller (2) und dem Grafikkontroller (4) zu überwachen und beim Ausbleiben des Verbindungssignals eine erste Command-Sequenz (20) zu starten,
- die erste Command-Sequenz (20) ausgebildet ist, ein internes zyklisches Signal zum wiederholten Starten einer zweiten Command-Sequenz (21) zu aktivieren, wobei die zweite Command-Sequenz (21) ausgebildet ist, über den Schrittmotorcontroller (17) den Schrittmotor (5) um einen Schritt in Richtung eines Anschlages oder einer Grundposition zu bewegen.

2. Anzeigevorrichtung nach Anspruch 1, **dadurch gekennzeichnet, dass** die zweite Command-Sequenz (20) solange ausführbar ist, bis der Zeiger (6) aus jeder möglichen Position zu dem Anschlag oder der Grundposition gelangt ist.

3. Anzeigevorrichtung nach einem der vorstehenden Ansprüche, **dadurch gekennzeichnet, dass** die erste Command-Sequenz (20) eine höhere Priorität als die zweite Command-Sequenz (21) besitzt.

4. Anzeigevorrichtung nach Anspruch 3, **dadurch gekennzeichnet, dass** die erste Command-Sequenz (20) ausgebildet ist den Watchdogtimer nach dem Zeitraum auszuschalten, der für das Zurückfahren des Zeigers benötigt wird.

5. Anzeigevorrichtung nach einem der vorstehenden Ansprüche, **dadurch gekennzeichnet, dass** als zyklisches Signal ein HSYNC-Signal verwendet wird.

6. Anzeigevorrichtung nach einem der vorstehenden Ansprüche, **dadurch gekennzeichnet, dass** die erste und/oder zweite Command-Sequenz (20, 21) in einem internen Flash-Speicher (10) des Grafikkontrollers (4) abgelegt sind.

7. Anzeigevorrichtung nach einem der Ansprüche 1 bis 5, **dadurch gekennzeichnet, dass** die erste und/oder zweite Command-Sequenz (20, 21) in einem internen RAM (11) des Grafikkontrollers (4) erzeugbar und abgelegt sind.

8. Anzeigevorrichtung nach einem der vorstehenden Ansprüche, **dadurch gekennzeichnet, dass** der Mikrokontroller (2) und der Grafikkontroller (4) über eine APIX-Kommunikationsschnittstelle (12) verbunden sind.

## Claims

1. Display device having a microcontroller (2), a graphics controller (4), wherein the graphics controller (4) does not have an arithmetic logic unit and can be controlled by the microcontroller (4) and by command sequences (20, 21) of a command sequencer (9) contained in the graphics controller (4), wherein the graphics controller (4) has a stepper motor controller (17) and the command sequencer (9) has a watchdog timer (18), **characterized in that**
- a display device is present, having a pointer (6) driven by means of a stepper motor (5),
- the watchdog timer (18) is designed for monitoring a connection signal between the microcontroller (2) and the graphics controller (4) and starting a first command sequence (20) when the connection signal is lacking,
- the first command sequence (20) is designed for activating an internal cyclic signal for repeatedly starting a second command sequence (21), wherein the second command sequence (21) is designed for moving the stepper motor (5) by one step in the direction of a stop or of a home position via the stepper motor controller (17).

2. Display device according to Claim 1, **characterized in that** the second command sequence (20) can be executed for as long until the pointer (6) has reached the stop or the home position from any possible position.

3. Display device according to one of the preceding claims, **characterized in that** the first command sequence (20) has a higher priority than the second command sequence (21).

4. Display device according to Claim 3, **characterized in that** the first command sequence (20) is designed for turning the watchdog timer off after the period of time needed for moving the pointer back.

5. Display device according to one of the preceding claims, **characterized in that** an HSYNC signal is used as cyclic signal.

6. Display device according to one of the preceding claims, **characterized in that** the first and/or second command sequence (20, 21) are stored in an internal flash memory (10) of the graphics controller (4).

7. Display device according to one of Claims 1 to 5, **characterized in that** the first and/or second command sequence (20, 21) can be generated and are stored in an internal RAM (11) of the graphics controller (4).

8. Display device according to one of the preceding claims, **characterized in that** the microcontroller (2) and the graphics controller (4) are connected via an APIX communication interface (12).

## Revendications

1. Dispositif indicateur comportant un microcontrôleur (2), un contrôleur (4) graphique, le contrôleur (4) graphique n'ayant pas d'unité logique du point de vue arithmétique et pouvant être commandé par le microcontrôleur (4) et par une séquence (20, 21) d'instructions d'un séquenceur (9) d'instructions contenu dans le contrôleur (4) graphique, le contrôleur (4) graphique ayant un contrôleur (17) de moteur pas à pas et le séquenceur (9) d'instructions, une minuterie (18) de surveillance, **caractérisé en ce que**
- il y a un dispositif indicateur ayant une aiguille (6) entraînée par un moteur (5) pas à pas,
- la minuterie (18) de surveillance est constituée pour surveiller un signal de liaison entre le microcontrôleur (2) et le contrôleur (4) graphique et, pour faire débuter une première séquence (20) d'instructions, si le signal de liaison est manquant,
- la première séquence (20) d'instructions est constituée pour activer un signal cyclique interne de répétition du début d'une deuxième séquence (21) d'instructions, la deuxième séquence (21) d'instructions étant constituée pour déplacer, par le contrôleur (17) du moteur pas à pas, le moteur (5) pas à pas d'un pas dans la direction d'une butée ou d'une position de base.

2. Dispositif indicateur suivant la revendication 1, **caractérisé en ce que** la deuxième séquence (20) d'instructions peut être réalisée jusqu'à ce que l'aiguille (6) soit arrivée de chaque position possible à la butée ou à la position de base.

3. Dispositif indicateur suivant l'une des revendications précédentes, **caractérisé en ce que** la première séquence (20) d'instructions a une priorité plus grande que la deuxième séquence (21) d'instructions.

4. Dispositif indicateur suivant la revendication 3, **caractérisé en ce que** la première séquence (20) d'instructions est constituée, pour mettre hors circuit la minuterie de surveillance après le laps de temps qui est nécessaire pour le retour de l'aiguille.

5. Dispositif indicateur suivant l'une des revendications précédentes, **caractérisé en ce qu'**il est utilisé un signal HSYNC comme signal cyclique.

6. Dispositif indicateur suivant l'une des revendications précédentes, **caractérisé en ce que** la première et/ou la deuxième séquences (20, 21) d'instructions sont mémorisées dans une mémoire (10) flashe interne du contrôleur (4) graphique.

7. Dispositif indicateur suivant l'une des revendications 1 à 5, **caractérisé en ce que** la première et/ou la deuxième séquence (20, 21) d'instructions peuvent être produites et mémorisées dans une RAM (11) interne du contrôleur (4) graphique.

8. Dispositif indicateur suivant l'une des revendications précédentes, **caractérisé en ce que** le microcontrôleur (2) et le contrôleur (4) graphique sont reliés par une interface (12) de communication APIX.
